# EUROPÄISCHE PATENTSCHRIFT

(11) **EP 0 311 786 B1**
(45) Veröffentlichungstag und Bekanntmachung des Hinweises auf die Patenterteilung: **17.03.1993**
(21) Anmeldenummer: 88114661.7
(22) Anmeldetag: 08.09.1988
(51) Int. Cl.: B23F 5/06

(54) **Verfahren und Maschine zum diskontinuierlichen Teilwälzschleifen**
Method and machine for discontinuous generating grinding with indexing
Procédé et machine pour la rectification discontinue de denture par génération dent par dent

(30) Priorität: 14.10.1987 DE 3734828
(43) Veröffentlichungstag der Anmeldung: 19.04.1989
(73) Patentinhaber: HURTH MASCHINEN UND WERKZEUGE G.m.b.H., D-80809 München (DE)
(72) Erfinder: Luhmer, Udo, D-8000 München 50 (DE); Schapp, Udo, Dr., D-8031 Wessling (DE)

(56) Entgegenhaltungen:
- DE-A- 2 307 493
- DE-A- 2 840 940
- DE-B- 1 223 664
- DE-C- 807 045
- FR-A- 2 111 211
- "MAAG-TASCHENBUCH Berechnung und Herstellung von Verzahnungen in Theorie und Praxis" 2te erweiterte und ergänzte Auflage, 1985, MAAG-ZAHNRÄDER AG, Zürich CH, Seite 318, Seiten 471 - 483
- MACHINES PRODUCTION. no. 372, 22 Februar 1984, BOULOGNE/SEINE FR Seiten 13 - 19; ANONYMOUS: "ENGRENAGES: CENTER DE TAILLAGE à CNC"

## Beschreibung

Die Erfindung betrifft ein Verfahren zum Teilwälzschleifen von Zahnrädern gemäß Oberbegriff von Patentanspruch 1 sowie eine dafür geeignete Maschine gemäß Oberbegriff von Patentanspruch 4.

Die bei der Feinbearbeitung gehärteter Zahnräder anfallenden Bearbeitungsaufgaben reichen heute von der Großserie bis hin zur Einzelfertigung. Während es in der Zahnrad-Weichfeinbearbeitung für jeden Einzelfall etablierte und leistungsfähige Verfahren und Maschinen gibt, gilt dies für die Zahnrad-Hartfeinbearbeitung noch nicht in gleichem Maße.

Speziell für kleinste Losgrößen bei höchsten Anforderungen an Genauigkeit und Flexibilität des Verfahrens und der Maschine gibt es heute nur eine Maschinentype auf dem Markt, mit der es möglich ist, die Zahnflanken in ihrer Topographie zu korrigieren (DE-A 23 07 493). Ihre Vielzahl von Arbeits- und Einrichtachsen macht jedoch einen erheblichen Zeitaufwand für das Umrüsten der Maschine erforderlich.

Das bekannte Schleifverfahren geht von einer bestimmten Wälzlage des Werkzeugs zum Werkstückzahn aus. Diese an sich fixe Wälzlage wird nur zum Zwecke der Korrektur verändert. Dazu sind zwei Korrektureinflüsse zu berücksichtigen, einmal die Profilkorrektur abhängig von der Wälzung und zum zweiten die Flankenlinienkorrektur abhängig von Schleifhub in Zahnlängsrichtung. Die Wälzung und der Vorschub in Zahnlängsrichtung sind im eingestellten Fall konstant. Dieses Prinzip hat einen Nachteil, nämlich daß die Einwirkung auf einen konkreten Oberflächenpunkt nur "flüchtig" erfolgen kann. Bei hartstoffbeschichteten Zahnrädern ist deshalb ein gezielter Arbeitsfortschritt nicht möglich.

Eine nach dem bekannten Teilwälzverfahren arbeitende Zahnflankenschleifmaschine ist in der DE-C 20 50 946 beschrieben. Bei dieser Maschine ist das Werkstück ortsfest aufgenommen und führt nur eine auf eine reine Drehbewegung reduzierte Wälzbewegung aus, wogegen der translatorische Anteil der Wälzbewegung der Schleifscheibe zugeordnet ist. Wegen der kontinuierlich ablaufenden Wälzbewegung ist es kaum möglich, auf ganz konkrete Oberflächenpunkte einzuwirken, um eine gewünschte Zahnflanken-Korrektur zu erzielen.

Ausgehend vom Stand der Technik gemäß DE-C 20 50 946 liegt der

Erfindung deshalb die Aufgabe zugrunde, ein Verfahren zu entwickeln, mit dem es möglich ist, Zahnräder hochgenau zu bearbeiten und dabei in einfacher Weise Korrekturen in die Oberfläche der Zahnflanken einarbeiten zu können. Außerdem soll eine Maschine entwickelt werden, auf der nach diesem Verfahren gearbeitet werden kann und die bei geringstmöglicher Zahl von Arbeits- und Einstellachsen schnell und einfach umzurüsten ist.

Diese Aufgabe wird gelöst mit einem Verfahren, wie es im Anspruch 1 angegeben ist, und mit einer Maschine, die die Merkmale des Anspruchs 4 aufweist. Das wird ermöglicht durch die erfindungswesentliche und neuartige Trennung der Bewegungen: zwar ist das Werkstück auch hier ortsfest aufgenommen und führt nur eine auf eine reine Drehbewegung reduzierte Wälzbewegung aus, aber während des Arbeitshubes der Schleifscheibe wird keine Wälzbewegung ausgeführt. Bei jeder Wälzbewegung weicht die Schleifscheibe der gewünschten Evolventen- bzw. Flankenform folgend gewissermaßen aus oder rückt nach, wobei das "Ausweichen" (Anspruch 2) die vorteilhaftere Bewegung darstellt. Werden schrägverzahnte Zahnräder geschliffen, ist die Weiterbildung nach Anspruch 3 erforderlich.

Das erfindungsgemäße Verfahren kann mit einer tellerförmigen Schleifscheibe durchgeführt werden, mit der sich theoretisch eine Punktberührung zwischen Schleifscheibe und Zahnflanke ergibt. In der Praxis ergibt sich jedoch eine Berührung auf einer schmalen sichelförmigen Fläche. Diese Fläche kann verkleinert werden, wenn eine Kegelschleifscheibe verwendet wird und noch weiter mit einer Schleifscheibe mit konkaver Arbeitsfläche. Eine solche, einer Punktberührung zumindest nahekommende kleine Berühr- bzw. Kontaktfläche ist Voraussetzung dafür, daß Zahnräder mit Korrekturen in der Oberfläche der Zahnflanken geschliffen werden können. Sie ist aber auch wichtig, um beim Schleifen mit einer CBN-Scheibe den nötigen Flächendruck zu erzeugen, sowie in anderen speziellen Fällen.

Es ist somit ein ganz wichtiges Merkmal des neuen Verfahrens bzw. der neuen Maschine, daß der Wälzschritt, d.h. das Verdrehen des Werkstücks, und der Wälzhub, d.h. das Zustellen der Schleifscheibe in der Z-Richtung, unabhängig voneinander erfolgen können. Damit ist eine ganze Reihe von Vorteilen verbunden, die das Verfahren bzw. die Maschine nach der DE-C 20 50 946 nicht bieten:
- Wenn der Wälzschritt und der Wälzhub in einem festen Verhältnis zueinander stehen, dann werden exakte Evolventen erzeugt, genau so wie bei einem festen Getriebezug oder über Rollbogen und Rollbänder, aber eben schrittweise, weshalb das Verfahren als diskontinuierlich bezeichnet werden kann.
- Wird das Verhältnis verändert, bleibt aber bei der Bearbeitung eines Zahnes gleich, dann entstehen Evolventen, die zu einem kleineren oder größeren Grundkreis gehören. Es handelt sich somit um Eingriffswinkel-Korrekturen.
- Wird das Verhältnis während der Bearbeitung eines jeden Zahnes geändert, dann entstehen Zahnformkorrekturen in Form von Höhenballigkeiten oder Kopf- und/oder Fußzurücknahmen.

Auch beim bekannten Zahnradhobeln nach dem Wälzverfahren wird während des Arbeitshubes keine Wälzbewegung ausgeführt (Maag-Taschenbuch, 2. Aufl., 1985, Seite 318 unter d)). Zwischen diesem Verfahren und dem erfindungsgemäßen Verfahren bestehen jedoch nicht unbeträchtliche Unterschiede:
a) beim Wälzhobeln handelt es sich um ein Herstellverfahren mit "stehendem" Werkzeug, beim erfindungsgemäßen Teilwälzschleifen um ein (Fein-)Bearbeitungsverfahren mit rotierendem Werkzeug;
b) beim Wälzhobeln folgt auf jede Vorschubbewegung ein Leer-Rückhub in der entgegengesetzten Richtung, beim erfindungsgemäßen Verfahren dagegen folgt auf jede Vorschubbewegung in der einen Richtung eine Vorschubbewegung in der anderen Richtung;
c) beim Wälzhobeln wird das Werkstück unter schrittweiser Drehung am Werkzeug entlanggeführt, beim erfindungsgemäßen Verfahren dagegen ist das Werkstück ortsfest und das Werkzeug, d.h. die Schleifscheibe, wird entsprechend dem jeweiligen Wälzschritt um den Wälzhub nachgeführt.

Nachstehend wird die Erfindung anhand von in 10 Figuren dargestellten Ausführungsbeispielen beschrieben. Es zeigen
- Fig. 1 und 2: eine Maschine nach der Erfindung in zwei Ansichten,
- Fig. 3: die Lage der Achsen und das Arbeitsprinzip,
- Fig. 4 bis 6: verschiedene Schleifscheiben im Zusammenwirken mit jeweils einem Zahn eines Werkstücks,
- Fig. 7 bis 9: die Kontaktflächen zwischen den Schleifscheiben von Fig. 4 bis 6 mit dem Werkstück, und
- Fig. 10: ein Schema eines Bearbeitungsablaufs.

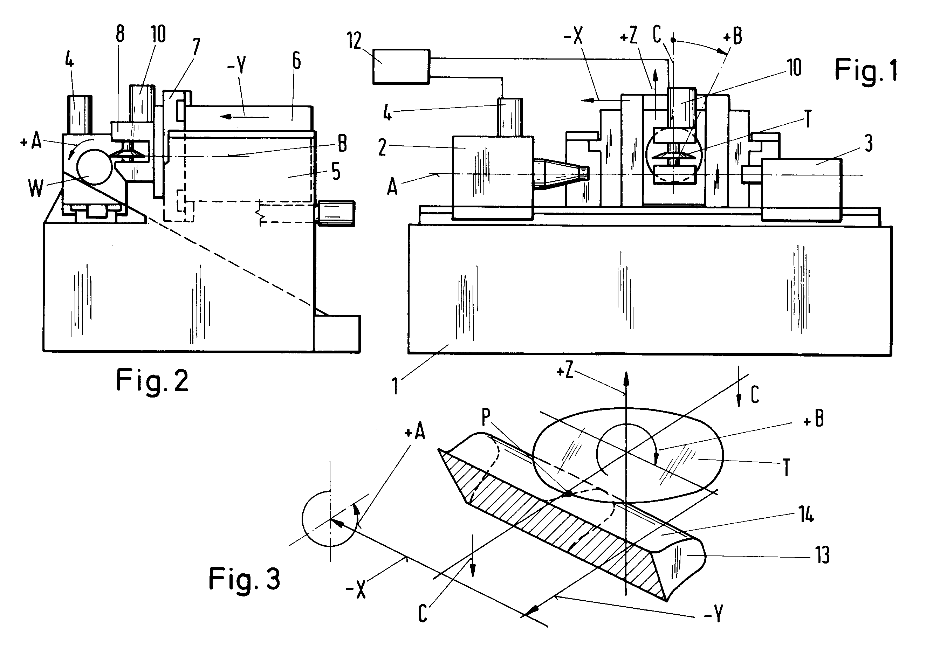

Auf einem Maschinengestell 1 sind zwei Reitstöcke 2, 3 verschiebbar angeordnet zur Aufnahme eines in Fig. 1 nicht dargestellten Werkstücks W. Einer davon (2) ist mit einer Antriebseinrichtung 4 zum schrittweisen u./o. kontinuierlichen Drehen des Werkstücks W ausgestattet. Auf dem Maschinengestell 1 ist ferner ein Zustellschlitten 5 rechtwinklig zur Achse A des Werkstücks W längs einer Achse Y verschiebbar angeordnet. An ihm ist ein Vorschubschlitten 6 parallel zur Werkstückachse A längs einer Achse X verschiebbar angeordnet und an ihm eine senkrecht zur X- und zur Y-Achse in Richtung einer Achse Z ein Hubschlitten 7. Der Hubschlitten 7 trägt einen um eine Achse B dreheinstellbaren Werkzeugkopf 8, in dem eine Schleifscheibe T mit ihrer Achse C drehantreibbar gelagert ist. Die nicht gezeigten Antriebseinrichtungen für die Schlitten 5, 6 und 7, die Antriebseinrichtung 4 für die Drehbewegung des Werkstücks W und eine Antriebseinrichtung 10 für die Drehbewegung der Schleifscheibe T sind mit einer Steuereinrichtung 12 verbunden, mit der ihre Bewegungen den jeweiligen Anforderungen entsprechend gesteuert werden.

In Fig. 3 ist die Anordnung der Achsen A, B, C, X, Y, Z nochmals perspektivisch dargestellt, ebenso das Zusammenwirken der Schleifscheibe T mit einem Zahn 13 des Werkstücks W, von dem eine Flanke 14 bearbeitet wird. Die momentane Kontaktfläche ist mit P bezeichnet.

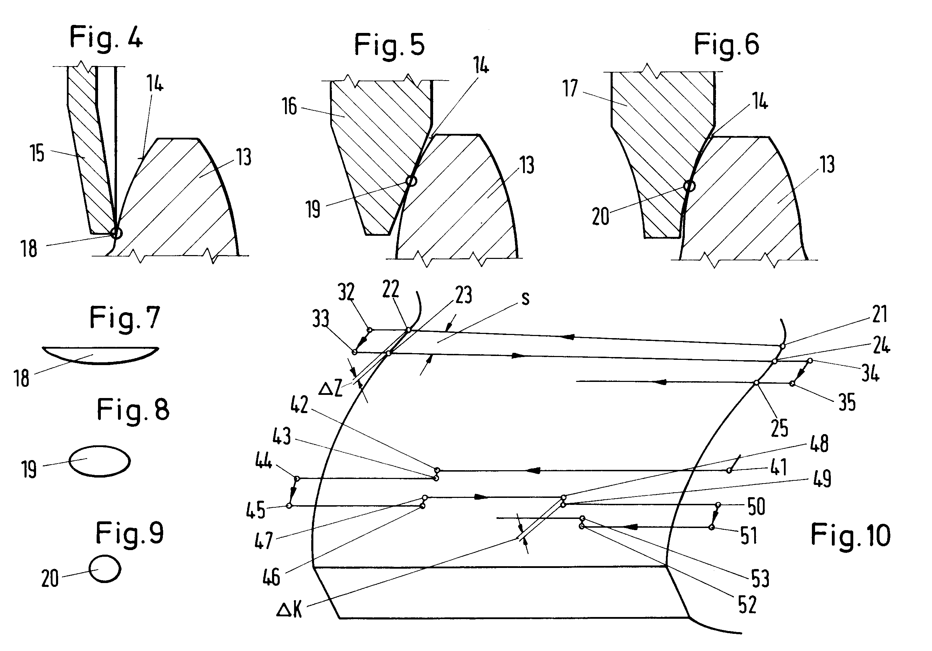

Die Fig. 4 bis 9 veranschaulichen das Zusammenwirken verschiedener Schleifscheiben 15, 16, 17 mit dem Zahn 13 bzw. der Flanke 14 sowie die sich dabei ergebenden Kontaktflächen 18, 19, 20.

Ein auf dieser Maschine bevorzugt auszuführendes Verfahren (es sind auch andere Verfahrensabläufe möglich) bzw. seinen Ablauf zeigt Fig. 10. Ausgehend von einem ersten Kontaktpunkt 21 zwischen Schleifscheibe T und Werkstück W bzw. Flanke 14 im Bereich einer Stirnseite führt die Schleifscheibe T eine Vorschubbewegung X aus. Dabei wandert die Kontaktfläche auf der Flanke 14 zur anderen Stirnseite bis zu einem Punkt 22. Jetzt wird das Werkstück W um einen Wälzschritt s gedreht, die Schleifscheibe führt einen Wälzhub ΔZ aus (Punkt 23). Anschließend macht die Schleifscheibe T eine entgegengesetzte Vorschubbewegung, bei der die Kontaktfläche auf der Flanke zur ersten Stirnseite zurückkehrt zu einem Punkt 24. Abermaliges Drehen des Werkstücks W um einen Wälzschritt s und Ausführen eines Wälzhubes ΔZ durch die Schleifscheibe T (Punkt 25). Weitere Vorschubbewegungen X, Wälzschritte s und Wälzhübe ΔZ folgen, bis die gesamte Flanke bearbeitet ist. Dann wird die Schleifscheibe T vom Werkstück W getrennt und das Werkstück W macht eine Drehbewegung von der Größe einer Zahnteilung, d.h., der benachbarte Zahn nimmt jetzt die Stellung des gezeigten Zahnes 13 ein und wird in gleicher Weise bearbeitet.

Wenn eine u.U. mögliche Verfälschung der Evolventenform im Bereich der Stirnseiten vermieden werden soll, kann die Vorschubbewegung X auch über den Punkt 22 hinaus bis zu einem Punkt 32 fortgesetzt werden, an dem die Schleifscheibe T nicht mehr mit der Flanke in Berührung steht. Der weitere Ablauf des Verfahrens ist wie oben angegeben, die entsprechenden Punkte dafür sind in Fig. 10 mit um jeweils "10" höheren Nummern bezeichnet.

Entlang des Vorschubweges kann die Schleifscheibe T über die Steuerung 12 ein- oder mehrmalig zu einer dem Wälzhub ΔZ ähnlichen Zusatzbewegung ΔK veranlaßt werden. Dabei dringt die Schleifscheibe T örtlich tiefer oder weniger tief in die Flanke 13 ein. In Fig. 10 sind beispielhaft einige derartige Zusatzbewegungen mit den Punkten 41 bis 52 angedeutet. Auf diese Weise lassen sich Korrekturen in der Topologie der Flanken ebenso erzeugen wie ballige Flanken.

Beim gezeigten und beschriebenen Verfahren ist ein geradverzahntes Werkstück W zugrundegelegt. Ist das Werkstück jedoch schrägverzahnt, dann macht es - während die Schleifscheibe T die Vorschubbewegung X ausführt - eine von der Größe der Zahnschräge β abhängige Drehbewegung, um die Schräge zu kompensieren bzw. um den Kontakt zwischen der Schleifscheibe T und der Flanke 13 aufrechtzuerhalten.

## Patentansprüche

1. Verfahren zum Bearbeiten der Zahnflanken (14) von Zahnrädern durch Teilwälzschleifen, bei dem die Drehbewegungskomponente der Wälzbewegung sowie die Teilungsdrehung dem Werkstück (W) und die translatorische Komponente der Wälzbewegung sowie die Schleifhubbewegungen (X) längs der Werkstückzahnflanken der Schleifscheibe (T) zugeordnet sind, und bei dem zur Erzeugung von Zahnflankenkorrekturen mit der Schleifscheibe während der einzelnen Schleifhübe gesteuerte Bewegungen relativ zu den zu bearbeitenden Zahnflanken ausgeführt werden können, dadurch gekennzeichnet, daß die Drehbewegungskomponente und die translatorische Komponente (7) der Wälzbewegung einzeln gesteuert und schrittweise jeweils zwischen den einzelnen Schleifhüben (X) ausgeführt werden, und daß die gesteuerten Bewegungen der Schleifscheibe zur Erzeugung von Zahnflankenkorrekturen mit den für die Ausführung der translatorischen Wälzbewegungskomponente vorgesehenen Organen ausgeführt werden.

2. Verfahren nach Anspruch 1, dadurch gekennzeichnet, daß die Schleifhubbewegungen (X) derart aufeinander folgen, daß die Zahnflanke vom Fußbereich ausgehend zur Kopfkante hin bearbeitet wird.

3. Verfahren nach Anspruch 1 oder 2, dadurch gekennzeichnet, daß beim Bearbeiten von schrägverzahnten Zahnrädern von einer Werkstückstirnseite zur anderen entlang von Schraubenlinien geschliffen wird, wozu dem Werkstück während jedem Schleifhub eine entsprechende Drehbewegung erteilt wird.

4. Maschine zum Bearbeiten der Zahnflanken von Zahnrädern (Werkstücken W) durch Teilwälzschleifen nach dem Verfahren gemäß Patentanspruch 1, mit einem Maschinengestell (1), einem relativ dazu verstellbaren Schleifkopf (8) zur drehantreibbaren Aufnahme einer Schleifscheibe (T) und mit einer Vorrichtung zur drehantreibbaren Aufnahme des zu bearbeitenden Werkstücks (W), wobei das Werkstück (W) ortsfest, d.h. axial und radial nicht verschiebbar, aufgenommen ist, und wobei die Schleifscheibe (T) außer in Richtung ihrer Rotationsachse (=̂ Wälzhubachse Z) auch in den zwei rechtwinkelig dazu und rechtwinkelig zueinander gerichteten Richtungen (Längsvorschubachse X und Zustellachse Y) verschiebbar und dafür antreibbar ist, dadurch gekennzeichnet, daß Steuereinrichtungen vorhanden sind, mit denen die Bewegungen der Schleifscheibe längs der Z-Achse schrittweise und unabhängig von der Drehbewegung steuerbar ist.

## Claims

1. A method of machining the tooth flanks (14) of gearwheels by generating grinding with indexing, wherein the rotation movement component of the generating movement and the indexing rotation are associated with the workpiece (W) and the translatory component of the generating movement and the grinding stroke movements (X) along the workpiece tooth flanks are associated with the grinding wheel (T), and wherein controlled movements relative to the tooth flanks to be machined can be executed for generating tooth flank corrections with the grinding wheel during the individual grinding strokes, characterised in that the rotation movement component and the translatory component (7) of the generating movement are individually controlled and are each executed stepwise between the individual grinding strokes (X), and in that the controlled movements of the grinding wheel for generating tooth flank corrections are executed by the elements provided for executing the translatory generating movement component.

2. A method according to claim 1, characterised in that the grinding stroke movements (X) follow upon each other such that the tooth flank is machined starting from the foot region towards the top edge.

3. A method according to claim 1 or 2, characterised in that when machining helical gearwheels, grinding is carried out from one workpiece face to the other along helical lines, for which purpose the workpiece is rotated accordingly during each grinding stroke.

4. A machine for machining the tooth flanks of gearwheels (workpieces W) by generating grinding with indexing in accordance with the method according to claim 1, having a machine frame (1), a grinding head (8) adjustable in relation thereto for rotatably receiving a grinding wheel (T), and having a device for rotatably receiving the workpiece (W) to be machined, wherein the workpiece (W) is held in a stationary, i.e. axially and radially non-displaceable manner, and wherein the grinding wheel (T), except in the direction of its rotation axis (≙ generating stroke axis Z), is also displaceable and for that rotatable in the two directions (longitudinal advance axis Z and feed axis Y) at right angles thereto and at right angles to each other, characterised in that there are control arrangements with which the movements of the grinding wheel along the Z axis can be controlled stepwise and independently of the rotation movement.

## Revendications

1. Procédé pour usiner, par rectification en développante partielle, les flancs des dents (14) de roues dentées, procédé dans lequel la composante de rotation du déplacement en développante ainsi que la rotation pas à pas sont associées à la pièce d'oeuvre (W), tandis que la composante de translation du déplacement en développante, ainsi que les courses de rectification (X) le long des flancs de dents de la pièce d'oeuvre sont associées au disque de rectification (T), et dans lequel, pour réaliser des corrections de flancs de dents, des déplacements commandés peuvent être effectués relativement aux flancs de dents à usiner par le disque de rectification pendant les différentes courses de rectification, procédé caractérisé en ce que la composante de rotation et la composante (Z) de translation du déplacement en développante sont commandées individuellement et réalisées pas à pas respectivement pendant les différentes courses de rectification (X), et que les déplacements commandés du disque de rectification pour réaliser des corrections de flancs de dents, sont effectués par les organes prévus pour la réalisation de la composante de translation du déplacement en développante.

2. Procédé selon la revendication 1, caractérisé en ce que les courses de rectification (X) se succèdent de façon telle que le flanc de la dent est usiné à partir de la zone de pied vers le bord de tête.

3. Procédé selon la revendication 1 ou 2, caractérisé en ce que, lors de l'usinage de roues à denture oblique, la rectification s'effectue d'une face frontale de la pièce d'oeuvre à l'autre le long de lignes en hélice, et, à cet effet, un déplacement en rotation est communiqué à la pièce d'oeuvre pendant chaque course de rectification.

4. Machine à usiner des flancs de dents de roues dentées (pièces d'oeuvre W) par rectification en développante partielle d'après le procédé selon la revendication 1, avec un bâti de machine (1), une tête de rectification réglable par rapport à ce bâti et destinée à recevoir un disque de rectification (T) en étant susceptible de l'entraîner en rotation, et avec un dispositif pour recevoir, en étant susceptible de l'entraîner en rotation, la pièce d'oeuvre (W) à usiner, cette pièce d'oeuvre étant reçue à poste fixe, en ce sens qu'elle ne peut se déplacer axialement et radialement, tandis que le disque de rectification (T), en dehors de son déplacement en direction de son axe de rotation (axe Z de course de rectification), peut également se déplacer dans deux directions perpendiculaires à cet axe et perpendiculaires entre elles (axe d'avance longitudinale X et axe d'approche Y) et être entraîné, à cet effet, machine caractérisée en ce qu'il est prévu des dispositifs de commande grâce auxquels les déplacements du disque de rectification le long de l'axe Z sont susceptibles d'être commandés pas à pas et indépendamment du déplacement en rotation.
